Europäisches Patentamt

European Patent Office

Office européen des brevets

(19)

(11) Numéro de publication: **0 244 333 B1**

(12) **FASCICULE DE BREVET EUROPEEN**

(45) Date de publication de fascicule du brevet:
09.10.91

(51) Int. Cl.⁵: **B65D 81/08**

(21) Numéro de dépôt: 87450012.7

(22) Date de dépôt: 24.04.87

(54) **Dispositif de calage et d'amortissement d'objets.**

(30) Priorité: 25.04.86 FR 8606146

(43) Date de publication de la demande:
04.11.87 Bulletin 87/45

(45) Mention de la délivrance du brevet:
09.10.91 Bulletin 91/41

(84) Etats contractants désignés:
AT BE CH DE ES FR GB GR IT LI LU NL SE

(56) Documents cités:
DE-A- 2 017 483     FR-A- 1 137 075
FR-A- 1 178 886     FR-A- 1 401 229
FR-A- 2 518 067     GB-A- 848 248
US-A- 2 809 760     US-A- 3 131 240
US-A- 3 262 598

(73) Titulaire: **ETABLISSEMENTS PIERRE DELAMA-**
**RE ET CIE Société Anonyme**

**F-27340 Criqueboeuf(FR)**

(72) Inventeur: **Delamare, Pierre**
**Le Bout de la Ville**
**F-27340 Criqueboeuf sur Seine(FR)**
Inventeur: **Delamare, Philippe**
**Rue du Village**
**F-27340 Criqueboeuf sur Seine(FR)**

(74) Mandataire: **Thébault, Jean-Louis**
**Cabinet Thébault S.A. 1 Allées de Chartres**
**F-33000 Bordeaux(FR)**

Rank Xerox (UK) Business Services

## Description

La présente invention a trait à un nouveau dispositif pour le calage et l'amortissement d'objets au cours de leur transport ou stockage.

Le but de l'invention est de proposer une nouvelle structure apte à s'interposer entre l'objet à protéger et son emballage ou conditionnement extérieur en constituant un calage amortisseur plus efficace que les systèmes actuellement connus et, plus précisément, plus progressif dans ses capacités d'absorption des chocs ou des efforts exercés sur ledit emballage ou conditionnement.

A cet effet, l'invention a pour objet un dispositif de calage et amortissement d'objets comprenant des éléments tubulaires rapportés sur les faces réceptrices de l'objet ou d'un conditionnement entourant l'objet à protéger, les axes desdits éléments étant parallèles auxdites faces réceptrices, caractérisé en ce que chaque élément tubulaire est formé d'un seul matériau et est susceptible de se déformer progressivement et de retrouver ses caractéristiques dimensionnelles et de portance après avoir subi une sollicitation transversalement à son axe, ledit élément tubulaire présentant, en section, une surface centrale évidée dont le pourcentage par rapport à la surface totale, y compris la partie évidée, est compris entre 1 et 25%, ledit élément tubulaire présentant en outre une courbe d'écrasement sous une contrainte appliquée transversalement à son axe comportant une première partie de faible pente correspondant aux petits chocs et vibrations, une seconde partie de pente sensiblement plus accusée correspondant à des contraintes élevées et une partie intermédiaire de pente intermédiaire entre celle de ladite première partie et celle de ladite seconde partie en sorte d'obtenir une courbe progressive optimale d'amortissement.

Par objet, on entend un objet unique ou une pluralité d'objets groupés dans un conditionnement intermédiaire, par exemple une caisse ou boîte en bois ou carton.

On s'est rendu compte, en effet, à la suite de recherches, essais et mesures, que c'était avec l'agencement défini ci-dessus que l'on obtenait les résultats les plus remarquables et surprenants quant à l'efficacité desdits éléments tubulaires ou boudins comme organes de calage amortisseur entre un objet, au sens défini plus haut et un conditionnement ou emballage externe tel qu'une caisse, une boîte, un film thermorétractable, une palette, etc...

Afin de bien faire comprendre le caractère inattendu et remarquable du comportement de boudins selon l'invention comme éléments de calage amortisseur, on va se reporter à la description qui va suivre donnée en référence aux dessins annexés sur lesquels :

- Figure 1 représente une courbe, considérée comme optimale ou idéale, dans des conditions données d'écrasement d'une structure amortisseuse en fonction de la contrainte de compression ;
- Figure 2 illustre une courbe obtenue avec une première structure connue ;
- Figure 3 représente plusieurs autres courbes de structures connues ainsi que diverses courbes obtenues à partir de dispositifs de calage-amortissement conformes à l'invention ;
- Figure 4 représente les seules courbes de la figure 3 relatives aux dispositifs selon l'invention ;
- Figure 5 représente en élévation latérale un chapelet de tronçons de tubes réunis entre eux et réalisé à partir d'un même tube ;
- Figure 6 est une vue de dessus partielle du chapelet de la figure 5 ;
- Figure 7 est une vue en coupe d'un boudin conforme à l'invention et à contour intérieur trilobé ;
- Figure 8 est une vue en perspective schématique d'un objet ceinturé à l'aide du dispositif de calage suivant la figure 5, et
- Figure 9 illustre un autre mode de mise en place du dispositif selon l'invention.

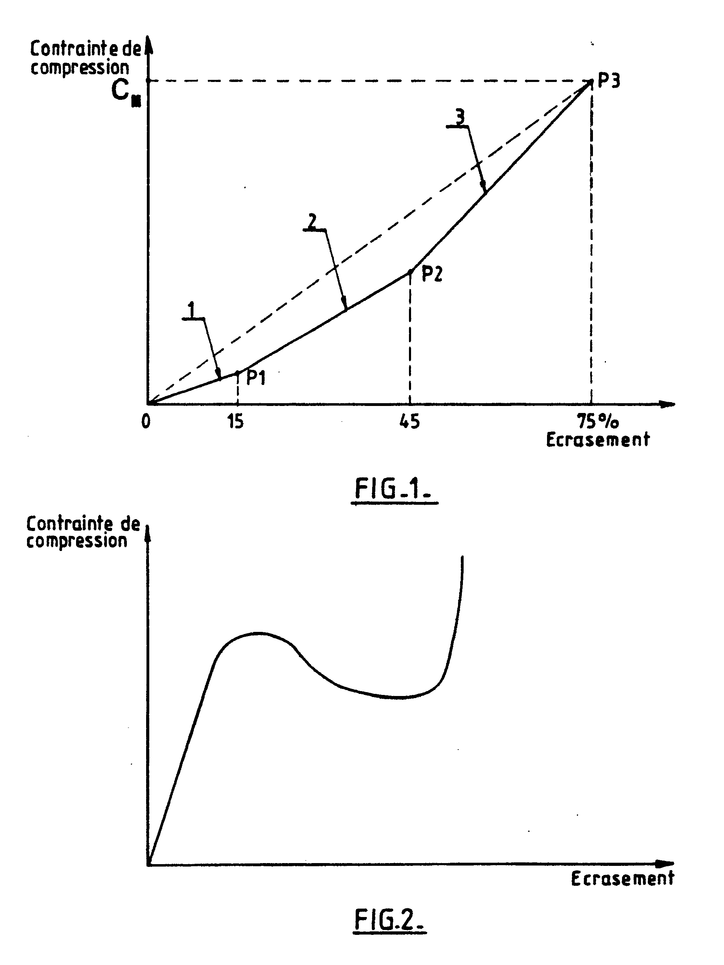

Sur la figure 1 on a représenté un système de référence portant en abscisse l'écrasement d'un matériau amortisseur exprimé en pourcentage par rapport au matériau non sollicité et en ordonnée la contrainte de compression à laquelle est soumise le matériau.

Le point P3 est déterminé en fonction de chaque objet à conditionner et de deux contraintes, l'une, imposée par la nature du matériau amortisseur et qui se traduit par un seuil d'écrasement maximal admissible, fixé le long des abscisses (par exemple 75%) et, l'autre, la résultante des trois paramètres suivants : poids de l'objet - hauteur de chute maximale admissible et seuil de fragilité de l'objet exprimé par la décélération maximale supportable par l'objet.

Cette résultante se traduit par une contrainte de compression maximale CM, fixée le long des ordonnées de la figure 1, et exprimée par exemple en g/cm² de la surface portante.

La courbe représentée en figure 1 par les trois segments successifs 1 à 3 reliant l'origine 0 au point P3 est une courbe d'amortissement considérée comme optimale ou idéale pour l'objet considéré.

Le premier segment 1 correspond à la nécessité de filtrer les petits chocs et vibrations inhérents au transport et la manutention. A cet effet, le segment 1 correspond sensiblement à une droite de faible pente traduisant une zone de grande sou-

2

plesse pour les faibles contraintes, donnant une déformation importante du matériau protégeant l'objet.

Il est intéressant d'avoir cette souplesse d'amortissement au début de l'écrasement du matériau, par exemple jusqu'aux alentours de 15% d'écrasement, comme illustré par la figure 1 (point P1).

Il est par ailleurs également intéressant d'avoir, au delà d'environ 45 à 50% d'écrasement du matériau, une courbe d'amortissement sensiblement linéaire (segment 3), de pente sensiblement plus accusée et correspondant à une zone de grande absorption d'énergie pour les contraintes élevées relatives aux écrasements maximaux et, enfin, d'avoir entre les segments 1 et 3 une courbe de raccordement intermédiaire ou de transition, constituée par le segment 2, dont la pente est intermédiaire entre celles des segments 1 et 3.

Ainsi, la courbe 1,2,3 considérée comme idéale est une courbe théorique progressive susceptible d'assurer la protection optimale dans les conditions fixées au départ.

La présente invention vise à proposer un dispositif de calage et amortissement susceptible de se rapprocher au mieux de cette courbe théorique.

Les dispositifs de calage connus ont des performances très éloignées de cette courbe théorique.

La figure 2 illustre par exemple la courbe d'écrasement en fonction de la contrainte de compression d'un élément de calage du type décrit dans le brevet US N° 3.262.598 et et constitué d'un tronçon de tube creux de section carrée.

Dans ce document les flancs latéraux dudit tronçon du tube sont chargés d'opposer, du fait de la réaction aux efforts de flambage, une résistance qui s'ajoute à celle du matériau lorsque la structure est soumise à écrasement. Cela se traduit sur la courbe de la figure 2 par une première partie rectiligne et de très forte pente traduisant une grande dureté de la structure d'amortissement jusqu'à ce que, brutalement, les deux flancs latéraux du tube lâchent (phénomène de flambage correspondant à la partie arrondie et redescendante de la courbe, consécutive à la partie ascendante linéaire). A ce moment la résistance de la structure s'effondre littéralement pour redevenir ensuite très dure, la structure devenant pratiquement incompressible.

Il est évident qu'une telle courbe n'a rien à voir avec la courbe de la figure 1 car elle ne possède absolument pas le caractère progressif et continu de ladite courbe 1,2,3.

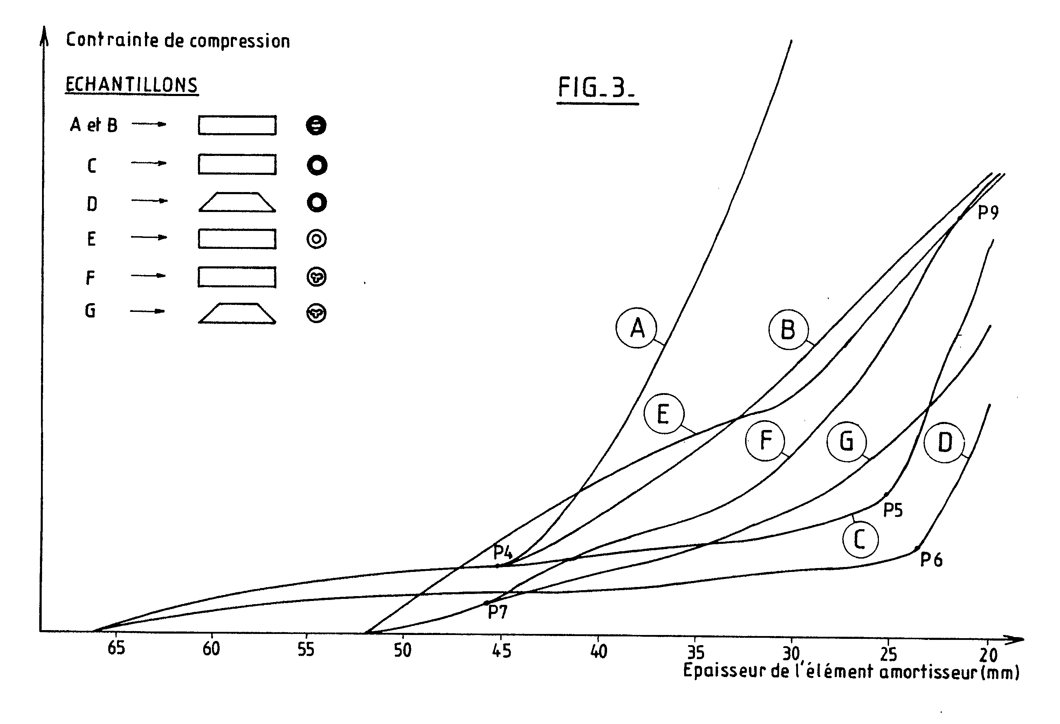

Sur la figure 3 on a représenté d'autres courbes de dispositifs de calage connus.

Les différentes courbes résultent d'essais réalisés par un laboratoire de mesures privé, le Bureau de Vérification Technique qui est agréé auprès du Ministère des Transports et de l'Industrie, et portant sur sept échantillons référencés A à G dont les caractéristiques sont données sur la figure 3 et ci-après.

En abscisse sont reportées les variations d'épaisseur (en mm) des éléments amortisseurs (échantillons) en fonction des variations de la contrainte de compression reportées en ordonnée, exercée sur les échantillons cylindriques perpendiculairement à leur axe. L'axe des ordonnées ne porte pas d'unité de contrainte de compression car celles-ci ont été très variables suivant la nature des matériaux et des échantillons. C'est, en fait, l'allure des courbes qui importe essentiellement en comparaison avec l'allure de la courbe de la figure 1.

Les courbes des échantillons A,B,C et D correspondent à des structures de calage du type décrit dans le brevet français N° 1.137.075.

L'échantillon A est un tube circulaire en caoutchouc de 100 mm de longueur, de diamètre extérieur 66 mm et d'épaisseur 10 mm, l'intérieur du tube étant muni d'une pastille de polyéthylène (cellules fermées) de section 20 mm × 20 mm et de même longueur que le tube.

L'échantillon B est identique à l'échantillon A mais comporte une pastille centrale en polyuréthane (cellules ouvertes).

L'échantillon C est un tube vide identique au tube des échantillons A et B.

L'échantillon D est un tube identique au tube de l'échantillon C mais chanfreiné à chaque extrémité à environ 45°, la petite base mesurant 55 mm.

Pour les trois courbes A,B,C on observe sur la figure 3 une pente très faible jusqu'à une réduction du diamètre externe des échantillons de l'ordre d'une vingtaine de mm (point P4). Ce comportement est dû au seul écrasement de la partie tubulaire des échantillons. Au delà du point P4 le comportement des échantillons diverge en fonction de la nature de la pastille interne ou de l'absence de cette dernière.

Après P4, la courbe se relève assez brutalement pour l'échantillon A et plus progressivement pour l'échantillon B. Quant à la courbe C, elle continue au delà de P4 d'avoir une très faible pente jusqu'au moment (point P5) où le tube est aplati complètement et offre alors brutalement une forte résistance.

La courbe D est, elle, encore plus molle que la courbe C, ce qui n'a rien de surprenant, et se relève au delà du point P6 correspondant à l'aplatissement du tube.

Aucune des courbes A à D n'est, et de fort loin, satisfaisante car elles s'éloignent toutes très fortement de la courbe idéale de la figure 1.

Pour tous les échantillons A à D le pourcentage d'écrasement pour de faibles contraintes est beaucoup trop grand, les courbes étant beaucoup trop molles. Par ailleurs, en fin d'écrasement, lesdites courbes se relèvent trop brutalement et présentent donc des points d'inflexion trop accusés nuisant bien entendu à la progressivité de l'amortissement.

Au contraire, les essais réalisés avec divers échantillons d'éléments de calage et amortissement conformes à l'invention (courbes E,F, et G) ont révélé, de manière tout à fait surprenante et inattendue, un comportement très éloigné de celui des échantillons A à D et extrêmement proche du comportement idéal illustré par la figure 1.

L'échantillon E est un tube de polyéthylène (cellules fermées) de 100 mm de longueur, de diamètre extérieur 52 mm et de diamètre intérieur 15 mm.

L'échantillon F est un tube identique au tube de l'échantillon E mais le contour intérieur n'est plus circulaire mais trilobé (diamètre moyen environ 15 mm).

L'échantillon G est un tube identique à celui de l'échantillon F mais chanfreiné à 45° environ à ses extrémités.

La différence d'allure entre les courbes A à G sur la figure 3 est saisissante.

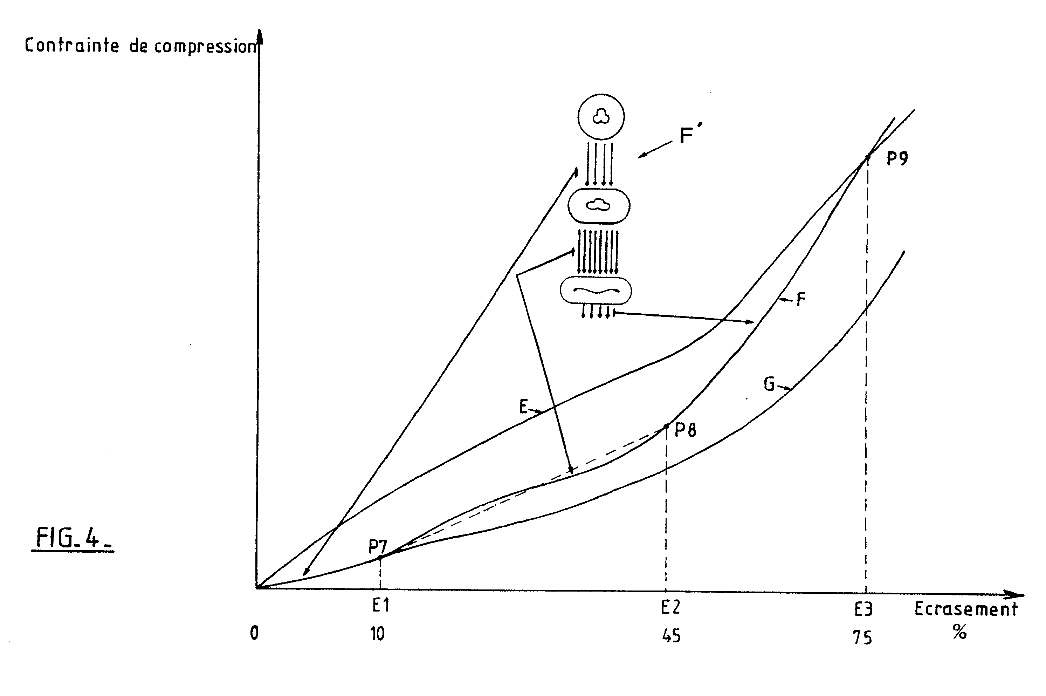

Par souci de clarté on a reporté en figure 4 les courbes E,F et G sur le même système de référence que celui de la figure 1 (pourcentage d'écrasement en abscisse et contrainte de compression en ordonnée) les courbes étant strictement les mêmes que celles de la figure 3.

C'est la courbe F qui se rapproche le plus de la courbe idéale de la figure 1 au point d'être presque confondue avec elle. On observe en effet une première partie OP7 correspondant sensiblement au segment 1 de la figure 1, suivie d'une seconde partie P7P8 correspondant sensiblement au segment 2 et, enfin, d'une troisième partie P8P9 correspondant sensiblement au segment 3 de la fig.1. Sur la fig.4, on a illustré en F′ l'écrasement progressif en section de l'échantillon F. Les points P7,P8 et P9 correspondent à des pourcentages d'écrasement de 10,45 et 75 respectivement, ce qui est extrêmement proche des valeurs correspondantes portées sur la fig.1.

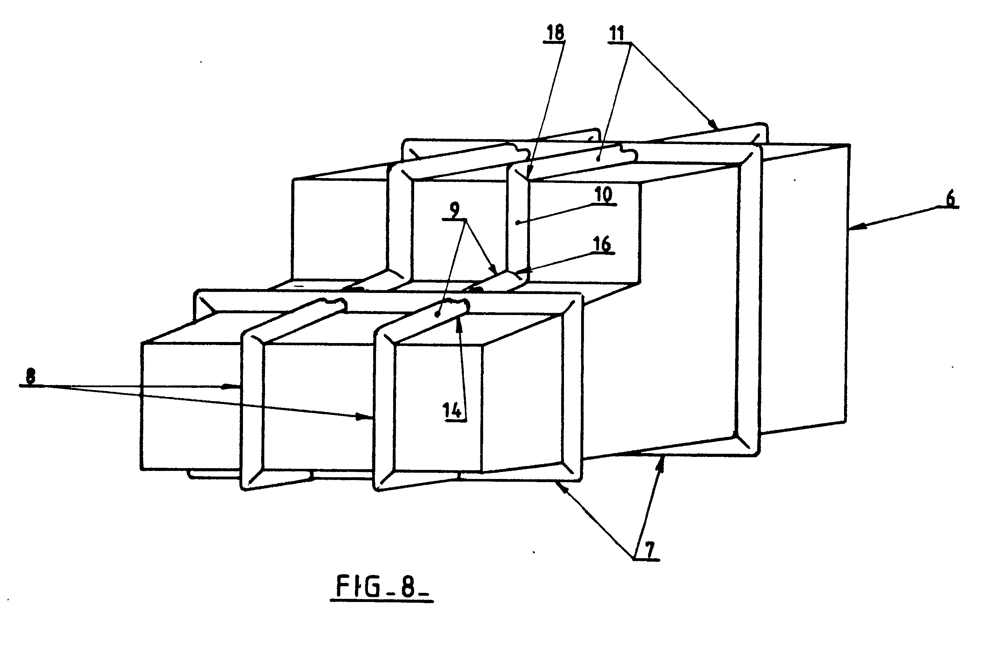

La courbe E est un peu plus "dure" que la courbe F tout en ayant une allure très voisine et tout à fait acceptable. La différence de comportement entre les échantillons E et F peut s'expliquer par le fait que le processus d'extrusion d'un contour interne circulaire (échantillon E) répartit les contraintes de manière uniforme, alors qu'avec un contour interne trilobé, tel que celui représenté en figure 7, il y a destruction de cette uniformité des contraintes entraînant au départ, pour l'échantillon F, une résistance à l'écrasement moins grande.

Il est à noter qu'avec les échantillons E et F on atteint (P9) un même pourcentage d'écrasement maximal admissible pour une même contrainte, l'échantillon F ayant cependant une meilleure souplesse.

Les courbes F et G sont communes jusqu'au point P7, ce qui indique que les chanfreins réalisés sur l'échantillon G n'apportent aucune amélioration de la souplesse dans le cas des petits chocs. Au delà du point P7, la courbe G est plus "molle" que la courbe F et, surtout, le pourcentage d'écrasement maximal (75%) est atteint bien avant d'avoir atteint la limite de compression préfixée (correspondant à l'ordonnée du point P9).

Si l'on reportait sur la figure 4 à partir de l'origine O les courbes A à D de la figure 3, on obtiendrait des courbes extrêmement aplaties et très en dessous de la courbe G, c'est à dire beaucoup trop "molles" et, par ailleurs, dénuées d'une bonne progressivité du fait des brusques variations de pente (points P4,P5,P6).

Le dispositif de calage selon l'invention est constitué à partir de tronçons de boudin tubulaire (tel celui représenté en coupe en 4 sur la figure 7) dont le contour extérieur est circulaire, oblong ou constitué par un polygone à côtés curvilignes ou rectilignes et, d'une manière générale, tel que, lors d'un écrasement perpendiculairement à l'axe du boudin, la surface de contact entre le boudin et le support sur lequel il est écrasé augmente sensiblement progressivement avec la contrainte de compression.

Le boudin présente un évidement central de préférence coaxial au boudin et dont le contour, dit contour intérieur, est, par exemple, circulaire (échantillon E), oblong ou constitué par un polygone curviligne ou rectiligne, par exemple un trilobe 5 en forme de trèfle comme représenté en figure 7 (échantillons F et G).

Le matériau constitutif du boudin peut être une mousse de matière plastique à cellules fermées ou ouvertes, telles que du polyéthylène, du polyuréthane, du PVC, du polyéther, du polyester, ou bien un caoutchouc naturel ou synthétique ou bien encore un aggloméré composite.

Les meilleurs résultats ont été obtenus avec des boudins du type de la figure 7 (échantillon F), c'est à dire en polyéthylène, à contour externe circulaire de l'ordre de 50 mm de diamètre et à contour interne trilobé de l'ordre de 15 mm de diamètre moyen. Le rapport du diamètre moyen sur le diamètre externe est de l'ordre de 0,3.

Plus précisément, en termes de surface considérée suivant la section du boudin, la surface centrale évidée est de l'ordre de 9% de la surface totale y compris la zone évidée. Des essais ont montré que l'on peut faire varier substantiellement ledit pourcentage de la zone centrale évidée et que, lorsque ce pourcentage se situe entre 1 et 25% de la section totale, les courbes d'amortissement sont encore très intéressantes. Bien entendu, plus on s'éloigne de la valeur préférentielle citée plus haut plus on risque de s'éloigner de la courbe idéale selon la figure 1, mais en demeurant cependant loin des courbes telles que A à D. C'est ainsi que l'on peut même rendre nul l'évidement central tout en conservant aux boudins des performances acceptables dans le cas d'objets lourds.

Il est à noter que le matériau du boudin peut éventuellement subir un traitement de surface, en particulier au droit de la surface intérieure, pour rigidifier la matière sur une certaine épaisseur et modifier ainsi localement les propriétés physiques.

La mise en place du dispositif de calage et amortissement de l'invention peut s'opérer de diverses manières. D'une manière générale et préférentielle, il est interposé entre l'objet au sens défini plus haut et une structure d'emballage ou conditionnement extérieur totalement enveloppante ou non, rigide ou non.

Le dispositif de calage est en contact direct avec l'objet ou indirect, une plaque de carton par exemple étant intercalée entre lui et l'objet.

La figure 8 illustre un mode de mise en oeuvre du dispositif de l'invention consistant à ceinturer l'objet 6 qui est de forme générale polyédrique et est constitué par exemple par un appareil ou une machine directement en contact avec le dispositif de calage.

Ce dernier est constitué de deux paires de boucles fermées 7 et 8 ceinturant l'objet 6 en se croisant à angle droit.

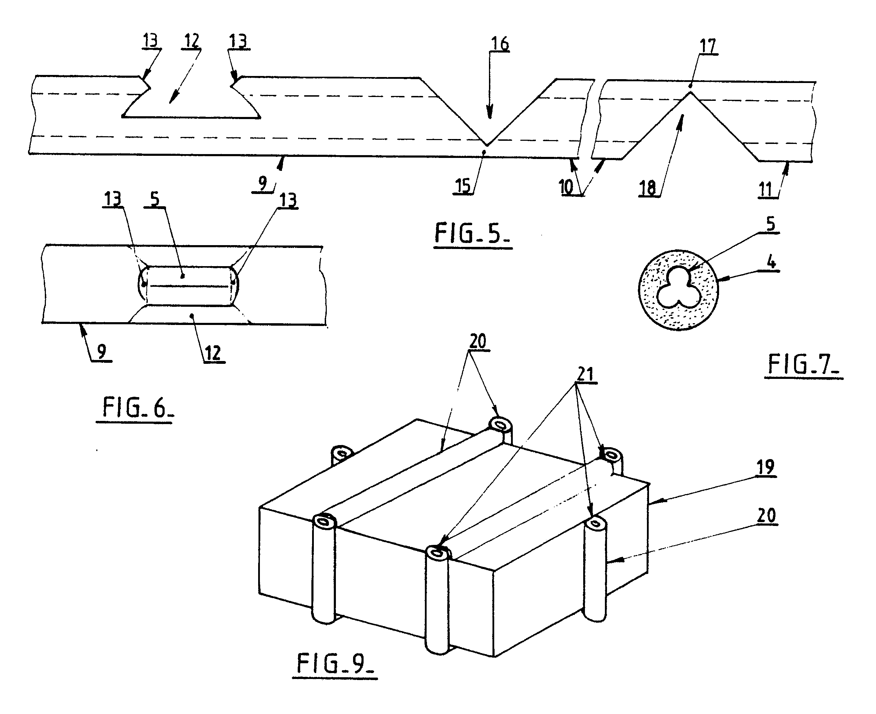

Les boucles 8 sont réalisées à partir d'un boudin de polyéthylène entaillé transversalement de la manière illustrée par les figures 5 et 6, le boudin en coupe ayant le profil de la figure 7.

Sur la figure 5 on a représenté trois tronçons 9,10 et 11 reliés entre eux.

Le tronçon 9 comporte une entaille transversale 12 en forme de queue d'aronde dont le fond est au voisinage de l'axe du boudin. Les bords supérieurs de l'entaille 12 sont chanfreinés en 13 (voir également figure 6) pour faciliter l'insertion d'un autre tronçon tel que 9, également muni d'une entaille 12, l'emboîtement des deux entailles 12 permettant une jonction sans soudure (telle que 14 sur la figure 8) et à angle droit des boucles 7,8, sans surépaisseur.

Le tronçon 9 est séparé du tronçon 10 par un pontage 15 réalisé à l'aide d'une entaille profonde en V 16 s'ouvrant du même côté du boudin que l'entaille 12.

Le tronçon 10 est séparé du tronçon 11 par un pontage 17 réalisé à l'aide d'une entaille profonde 18 identique à l'entaille 16 mais diamétralement opposée.

Les entailles 16,18 font un angle de 90° afin de permettre la mise en équerre des tronçons 9,10 et 10,11 pour épouser les faces et les angles, saillants ou rentrants, de l'objet 6, la longueur des différents tronçons du chapelet constituant chaque boucle 7,8 correspondant à celle de la face de l'objet sur laquelle est appliqué chaque tronçon.

Sur la figure 8, l'une des boucles 8 comporte, sur la face supérieure de l'objet 6, un tronçon 9, permettant le croisement avec l'une des boucles 7, un tronçon 10 et un tronçon 11 également muni d'une entaille 12 en queue d'aronde pour la jonction-croisement avec l'autre boucle 7. Dans les angles, les entailles en V 16 et 18 sont pratiquement refermées. Les boucles 7 et 8 ne sont pas fixées à la surface de l'objet 6 et sont maintenues en place par leurs seules liaisons mutuelles.

Les boucles 7 et 8 sont facilement réalisables automatiquement à la machine à partir d'un tube venant d'extrusion, sectionné en longueurs correspondant à celles des différentes boucles 7,8 et entaillé, par exemple à l'aide d'un emporte-pièce, en fonction d'un programme d'entailles 12, 16 et 18 réparties le long de chaque boucle en fonction de la morphologie de l'objet à protéger.

La mise en place des boucles ceinturant l'objet s'effectue à la main très facilement.

L'aboutage des extrémités de chaque boucle s'effectue par soudage.

L'objet 6 muni de ses boucles protectrices 7,8 est placé ensuite par exemple dans une caisse d'expédition en carton ondulé dont les faces internes viennent en contact avec lesdites boucles 7,8.

La figure 9 illustre une autre manière de protéger un volume parallélépipèdique 19, par exemple un carton d'emballage dans lequel un ou plusieurs objets sont disposés.

Chaque face externe du volume 19 est munie d'un ou plusieurs tronçons 20 de boudins tels que celui de la figure 7.

Chaque tronçon 20 est muni d'un méplat 21 encollé ou muni d'un film adhésif et permettant le collage contre les faces du volume 19, aux endroits désirés et de manière à former ou non des boucles.

Le nombre, la longueur et le diamètre externe des tronçons 20 peuvent varier dans de larges mesures en fonction de la nature de l'objet à protéger et des conditionnements complémentaires entourant l'objet protégé ou intercalés entre l'objet et le dispositif de protection selon l'invention.

Il est à noter que les tronçons, individuels ou non, peuvent être cintrés pour s'appliquer sur des surfaces incurvées.

L'objet protégé tel que représenté en figure 9 est, comme l'objet de la figure 8, destiné à être enfermé par exemple dans une caisse de carton d'expédition.

## Revendications

1. Dispositif de calage et amortissement d'objets comprenant des éléments tubulaires (9,10,11,20) rapportés sur les faces réceptrices de l'objet ou d'un conditionnement (19) entourant l'objet à protéger (6), les axes desdits éléments étant parallèles auxdites faces réceptrices, caractérisé en ce que chaque élément tubulaire (9,10,11,20) est formé d'un seul matériau et est susceptible de se déformer progressivement et de retrouver ses caractéristiques dimensionnelles et de portance après avoir subi une sollicitation transversalement à son axe, ledit élément tubulaire présentant, en section, une surface centrale évidée dont le pourcentage par rapport à la surface totale, y compris la partie évidée, est compris entre 1 et 25%, ledit élément tubulaire présentant en outre une courbe d'écrasement sous une contrainte appliquée transversalement à son axe comportant une première partie de faible pente correspondant aux petits chocs et vibrations, une seconde partie de pente sensiblement plus accusée correspondant à des contraintes élevées et une partie intermédiaire de pente intermédiaire entre celle de ladite première partie et celle de ladite seconde partie en sorte d'obtenir une courbe progressive optimale d'amortissement.

2. Dispositif suivant la revendication 1, caractérisé en ce que les éléments tubulaires sont individuels (20) et fixés sur les faces réceptrices de l'objet ou d'un conditionnement (19) entourant l'objet, par collage d'un méplat (21) réalisé sur lesdits éléments tubulaires et éventuellement muni au préalable d'une pellicule adhésive.

3. Dispositif suivant la revendication 1, caractérisé en ce qu'il est constitué d'éléments agencés en boucles fermées (7,8) ceinturant l'objet à protéger (6).

4. Dispositif suivant la revendication 3, caractérisé en ce que chaque boucle (7,8) est constituée d'éléments (9,10,11) disposés en chapelet, chacun de longueur correspondant à celle de la face sur laquelle il est appliqué, les éléments étant reliés entre eux par des pontages (15,17) délimités par des entailles en V (16,18) disposées de manière à permettre la formation d'un angle entre deux éléments consécutifs.

5. Dispositif suivant la revendication 3 ou 4, caractérisé en ce que les boucles (7,8) se croisent, de préférence à angle droit et sont munies, à ces intersections, d'un système d'emboîtement à mi-profondeur, du type à queue d'aronde (12) ou analogue, réalisé par entaillage des éléments concernés (9,11) aux endroits appropriés.

6. Dispositif suivant l'une des revendications 1 à 5, caractérisé en ce que le matériau des éléments est choisi dans le groupe constitué par les mousses de matière plastique à cellules fermées ou ouvertes, les caoutchoucs naturels ou synthétiques, les agglomérés composites.

7. Dispositif suivant l'une des revendications 1 à 6, caractérisé en ce que chaque élément a en section un contour extérieur et un contour intérieur identiques ou non et choisis dans le groupe constitué par les contours circulaires, oblongs et polygonaux, curvilignes ou rectilignes.

8. Dispositif suivant l'une des revendications 1 à 7, caractérisé en ce que chaque élément (4) est en polyéthylène, présente un contour extérieur circulaire et un contour intérieur trilobé (5), la surface centrale évidée représentant environ 9 à 10% de la surface totale, en section, de l'élément.

## Claims

1. Means for wedging and cushioning objects comprising tubular members (9, 10, 11, 20) placed on the exposed sides of the object or of a packaging (19) surrounding the object requiring protection (6), the axes of the said members being parallel to the said exposed sides, characterised in that each tubular member (9, 10, 11, 20) is made of a single material and is capable of deforming progressively and of recovering its dimensional and load-bearing characteristics after having been subjected to a stress transversely to its axis, the said tubular member having in cross-section a hollow central area of which the percentage with respect to the total surface area, including the hollow portion, lies between 1 and 25%, the said tubular member also having a curve of deformation under a stress applied transversely to its axis comprising a first part having a shallow slope corresponding to minor impacts and vibrations, a second part having a substantially steeper slope corresponding to high stresses and an intermediate part of intermediate slope between the said first part and the said second part so as to obtain an optimum progressive damping curve.

2. Means according to claim 1, characterised in that the tubular members are separate (20) and are attached to the exposed sides of the object or a packaging (19) surrounding the object by bonding a flat (21) provided on the said tubular members which may previously have been provided with an adhesive film.

3. Means according to claim 1, characterised in that it comprises members in the form of closed loops (7,8) passing round the object requiring protection (6).

4. Means according to claim 3, characterised in that each loop (7,8) comprises members (9, 10, 11) in the form of a string of beads, each of a length corresponding to the side against which it is applied, the members being connected together by bridging members (15,17) constituted by V notches (16,18) located in such a way as to allow an angle to be formed between two consecutive members.

5. Means according to claim 3 or 4, characterised in that the loops (7,8) cross over, preferably at right angles, and are provided at these intersections with a rebated interlocking system of a dovetail (12) or similar type constructed by providing recesses in the members in question (9,11) at the appropriate places.

6. Means according to any one of claims 1 to 5, characterised in that the material of the members is selected from the group consisting of intercommunicating or isolated cell foamed plastics material, natural or synthetic rubbers, composite conglomerates.

7. Means according to any one of claims 1 to 6, characterised in that each member has in cross-section an outer perimeter and an inner perimeter which may or may not be identical and which are selected from the group comprising circular, oblong and polygonal, curvilinear or rectilinear perimeters.

8. Means according to any one of claims 1 to 7, characterised in that each member (4) is made of polyethylene, has a circular outer perimeter and a three-lobe inner perimeter (5), the hollow central area representing some 9-10% of the total cross-sectional surface area of the member.

**Patentansprüche**

1. Vorrichtung zur Einrichtung und Stoßdämpfung von Gegenständen, umfassend schlauchförmige Elemente (9, 10, 11, 20), die auf Außenflächen des Gegenstands oder einer Verpackung (19), die den zu schützenden Gegenstand (6) umgibt, aufgesetzt sind, wobei die Achsen der besagten Elemente parallel zu den besagten Außenflächen verlaufen, dadurch **gekennzeichnet,** daß jedes schlauchförmige Element (9, 10, 11, 20) aus einem einzigen Material gebildet und geeignet ist, sich progressiv zu deformieren und seine dimensionellen Eigenschaften und seine Tragfähigkeit wieder einzunehmen, nachdem es einer Beanspruchung quer zu seiner Achse unterworfen wurde, wobei das besagte schlauchförmige Element im Schnitt eine zentrale Aussparungsfläche aufweist, deren Prozentsatz in bezug auf die Gesamtfläche einschließlich des ausgenommenen Teils zwischen 1 und 25% liegt, wobei das besagte schlauchförmige Element desweiteren eine Stauchkurve unter transversal zu seiner Achse aufgebrachter Belastung aufweist, die einen ersten Abschnitt geringer Neigung entsprechend kleinen Stößen und Vibrationen, einen zweiten Abschnitt mit wesentlich ausgeprägterer Neigung entsprechend erhöhten Belastungen sowie einen Zwischenabschnitt mit einer Neigung zwischen derjenigen des besagten ersten Abschnitts und derjenigen des besagten zweiten Abschnitts aufweist, so daß eine progressive in bezug auf Stoßdämpfung optimale Kurve erhalten wird.

2. Vorrichtung nach Anspruch 1, dadurch gekennzeichnet, daß die schlauchförmigen Elemente individuell (20) und auf den Außenflächen des Gegenstandes oder einen den Gegenstand umgebenden Verpackung (19) durch Aufkleben an einer Anflachung (21), die an den besagten schlauchförmigen Elementen angebracht und gegebenenfalls vorher mit einem Klebstoffilm versehen ist, befestigt sind.

3. Vorrichtung nach Anspruch 1, dadurch gekennzeichnet, daß sie aus Elementen gebildet wird, die in geschlossenen Schleifen (7, 8) den zu schützenden Gegenstand (6) umgürten.

4. Vorrichtung nach Anspruch 3, dadurch gekennzeichnet, daß jede Schleife (7, 8) aus Elementen (9, 10, 11) gebildet wird, die perlenschnurartig jeweils von einer Länge entsprechend derjenigen der Fläche, auf der es angebracht ist, angeordnet sind, wobei die Elemente untereinander durch Brücken (15, 17), die durch V-förmige Einschnitte (16, 18) begrenzt sind, die derart angeordnet sind, daß sie die Bildung eines Winkels zwischen zwei aufeinanderfolgenden Elementen ermöglichen, verbunden sind.

5. Vorrichtung nach Anspruch 3 oder 4, dadurch gekennzeichnet, daß die Schleifen (7, 8) sich vorzugsweise in einem rechten Winkel kreuzen und an ihren Schnittstellen mit einem System zum Ineinandergreifen auf halbe Tiefe vom Schwalbenschwanztyp (12) od.dgl. versehen sind, das durch Einschneiden von betreffenden Elementen (9, 11) an geeigneten Stellen realisiert ist.

6. Vorrichtung nach einem der Ansprüche 1 bis 5, dadurch gekennzeichnet, daß das Material der Elemente aus der Gruppe gebildet aus den Plastikmaterialschäumen mit geschlossenen oder offenen Zellen, natürlichen oder synthetischen Kautschukarten und Kompositagglomeraten ausgewählt ist.

7. Vorrichtung nach einem der Ansprüche 1 bis 6, dadurch gekennzeichnet, daß jedes Element im Schnitt eine Außenkontur und eine Innenkontur besitzt, die identisch oder nicht und ausgewählt aus der Gruppe bestehend aus kreisförmigen, länglichen und polygonalen, krummlinigen und geradlinigen Konturen sind.

8. Vorrichtung nach einem der Ansprüche 1 bis 7, dadurch gekennzeichnet, daß jedes Element (4) aus Polyethylen ist sowie eine kreisförmige Außenkontur und eine kleeblattförmige Innenkontur (5) aufweist, wobei die zentrale Aussparungsfläche etwa 9 bis 10% der Gesamtfläche des Elements im Schnitt darstellt.

FIG.1.

FIG.2.

FIG.3.

Contrainte de compression

ECHANTILLONS

A et B →
C →
D →
E →
F →
G →

Épaisseur de l'élément amortisseur (mm)

65    60    55    50    45    40    35    30    25    20

P4
P5
P6
P7
P9

A  B  E  F  G  D  C

EP 0 244 333 B1

FIG. 4.

Contrainte de compression

F'

P9

F

G

E

P8

P7

E1        E2        E3     Ecrasement
0         10        45        75        %

EP 0 244 333 B1

FIG.7.

FIG.5.

FIG.6.

FIG.9.

4

5

11

17

18

10

16

15

13

12

13

9

13

5

12

9

13

19

20

21

20

FIG - 8 -